# EUROPEAN PATENT APPLICATION

(11) **EP 1 500 972 A1**
(43) Date of publication of application: **26.01.2005**
(21) Application number: 04003509.9
(22) Date of filing: 17.02.2004
(51) Int. Cl.: G03B 21/00, G09F 19/18

(54) **Apparatus for projecting advertising pictures in combination with a main projection system**

(30) Priority: 22.07.2003 IT MI20031506
(71) Applicant: Top Immagine S.r.L., 24028 Ponte Nossa (Prov. of Bergamo) (IT)
(72) Inventor: Ferri, Carlo, 21040 Carnago (Prov. of Varese) (IT)
(74) Representative: Modiano, Guido, Dr.-Ing.

(57) **Abstract**

An apparatus (1) for projecting advertising pictures, videos and the like in combination with a cinema screening performed by a main projection unit, comprising at least one auxiliary projection unit (2) that is connected to a central processing unit (3) and to means (8) for storing pictures, clips and the like, the auxiliary projection unit (2) being activated by means of an enable signal that originates from the main projection unit (4), which is adapted to detect indicator means (6) applied to a projection film (5) in order to determine the moment when the auxiliary projection unit is to be enabled.

## Description

The present invention relates to an apparatus for projecting advertising pictures, videos and the like in combination with a main projection system. More particularly, the invention relates to a fully automatic apparatus for performing projections in cinemas with clearance for activation by means of the main projection system.

As is known, cinemas have always shown, in the idle times between feature presentations, adverts of all kinds, both in the form of still pictures, such as slides and the like, and in the form of actual advertising clips.

For this purpose, cinemas used to be provided with a projection booth in which there were two film projectors and a still picture (slide) projector.

The two projectors projected the feature presentation and the filmed adverts and also projected documentaries and newsreels.

The slide projector was used instead to project onto the screen still advertising pictures especially dedicated to advertising commercial concerns of any kind located in the immediate vicinity of the cinema.

The work related to splicing the films, bonding the various clips and starting the projectors, as well as monitoring during operation of such projectors, was normally performed by an operator with the aid of assistants.

This solution was a necessity, since the devices described above were not automated in any way.

Currently there has been a radical change in the concept of cinema projection, since the projection booth currently is unattended and most of the time it contains a single projector that performs all the functions related to projecting the show in a fully automatic manner.

The projector in fact performs the instructions set on the projection film, which during its travel through the projector sends to said projector the signals required to set the lenses, up to the adjustment of the projection gate and thus of everything that may be of use in projecting the show in an optimum manner.

Monitoring of the progress of projection is therefore entrusted substantially to an operator who is located at the ticket counter of the cinema and uses a television camera with a closed-circuit monitor.

Therefore, the classic role of the operator and of his assistants has disappeared, since currently there is no convenience in staying in the projection booth.

However, the disappearance of the role of the operator has also made it impossible to project local advertising clips, slides or the like, since currently there is no automatic apparatus available for this operation. Accordingly, it is no longer possible to show advertisements related to commercial concerns located in the neighborhood of the cinema, which normally are not interested in accessing conventional advertising circuits, both because they are too expensive and because generally they are aimed at a national audience and not at a local audience who would be interested in knowing the commercial activity of the region.

Accordingly, either local commercial concerns can access national advertising circuits with adverts that are normally inserted directly in the film to be projected and are therefore distributed nationwide, or they cannot use any kind of advertising.

This situation on the one hand has made it impossible for small commercial concerns to advertise, and on the other hand has turned out to be a lost source of revenue for cinemas.

The aim of the present invention is to provide an apparatus for projecting advertising pictures, videos and the like that can be combined automatically with a main projection system.

Within this aim, an object of the present invention is to provide an apparatus for projecting advertising images, videos and the like that can be activated automatically without the aid of an operator, with control by the main projection system.

Another object of the present invention is to provide an apparatus for projecting advertising pictures, videos and the like that can be synchronized automatically with the main projection apparatus.

Another object of the present invention is to provide an apparatus for projecting advertising pictures, videos and the like that is highly reliable, relatively simple to provide, and at competitive costs.

This aim and these and other objects that will become better apparent hereinafter are achieved by an apparatus for projecting advertising pictures, videos and the like in combination with a cinema screening performed by a main projection unit, characterized in that it comprises at least one auxiliary projection unit that is connected to a central processing unit and to means for storing pictures, clips and the like, said auxiliary projection unit being activated by means of an enable signal that originates from said main projection unit, which is suitable to detect indicator means on the projection film in order to determine the moment when said auxiliary projection unit is to be enabled.

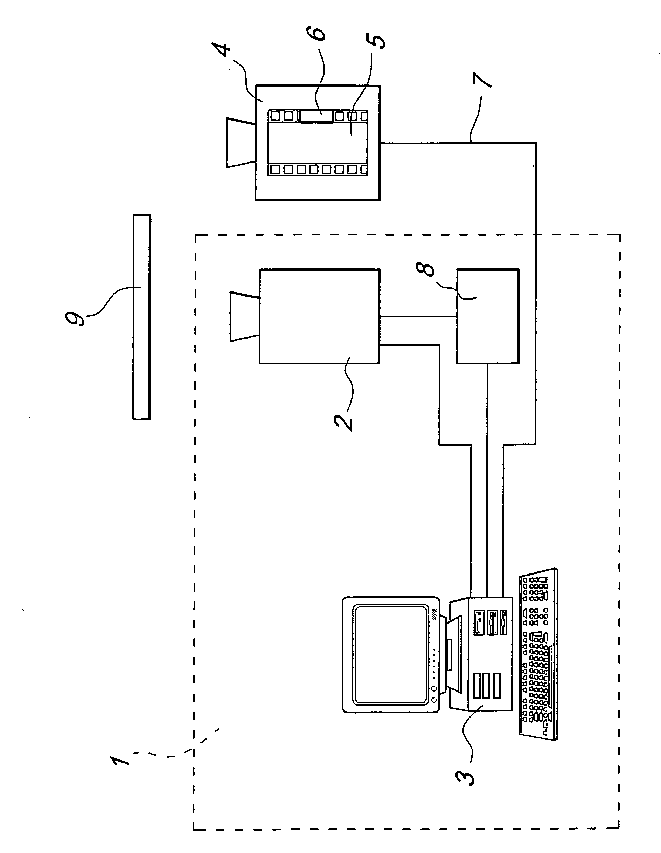

Further characteristics and advantages of the invention will become better apparent from the description of a preferred but not exclusive embodiment of the apparatus according to the present invention, illustrated by way of nonlimiting example in the accompanying drawing, wherein the only figure is a block diagram of the apparatus according to the present invention.

With reference to the figure, the apparatus according to the invention, generally designated by the reference numeral 1, comprises: at least one auxiliary projection unit 2, such as for example a video projector, a custom-built film projector, a slide projector, and the like; and a central processing unit 3, which is suitable to control the projection unit 2 and to receive an enable signal from a main projection unit 4 of the cinema. Substantially, the main projector 4 is dedicated to the projection of the feature presentation that is scheduled in the cinema or theater, and the film 5 of the feature presentation is provided with suitable indicator means 6 which, detected by the projector 4, allow such projector to send a control signal by means of a signal line 7 to the central processing unit 3.

Conveniently, the central processing unit 3 can be constituted for example by a PC, which upon receiving the enable signal from the projector 4 enables the projection unit 2 to project still images, videos and the like taken from a storage unit 8 for images, videos and the like, which is for example a DVD player, a hard disk, a videotape player, and the like.

The images, videos and the like can also be sent by digital transmission, satellite transmission, or cable transmission.

Conveniently, the apparatus according to the present invention can also be provided with a projection screen 9, which can be used for example if the apparatus is installed in theaters and the like, where the projection screen may not be provided or be unsuitable for viewing advertising pictures or films.

Operation of the apparatus according to the present invention is as follows.

The supervisor of the cinema sets up the projector 4 to project a given film 5 as feature presentation, and also prepares adverts of various kinds, which are loaded in the image storage means 8, which are connected to the central processing unit 3 and to the auxiliary projection unit 2.

The supervisor further prepares on the film 5 of the projector 4 suitable indicator means 6, which are suitable to allow the projector, when it detects the indicator means 6, to send an enable signal to the central processing unit 3, which in turn enables the auxiliary projection unit 2 to project the advertising pictures or clips loaded in the storage means 8.

In this manner, the projection unit 2 is synchronized with the main projector 4 and can be activated automatically under the control of said main projector, therefore without the need for the presence of an operator.

The apparatus according to the present invention therefore allows to combine advertising pictures and clips, usually of local commercial concerns located in the neighborhood of the cinema, in addition to the normal adverts inserted directly in the projection film 5.

The apparatus according to the invention therefore solves the problem of showing "low level" adverts in combination with "high level" adverts without having to resort to the presence of a specialized operator, with automation achieved by synchronizing the main projector 4 and the projection unit 2 one another.

The apparatus can also be installed in hotels in order to transmit adverts to the guests rooms.

The apparatus is also adapted to be used on board of vehicles, such as motor vehicles and the like, or ships.

In practice it has been found that the apparatus according to the present invention fully achieves the intended aim and objects, since it allows to project, without the aid of any operator, additional adverts with respect to the adverts normally inserted in the film, therefore allowing local commercial concerns to advertise at low cost, at the same time allowing cinemas to regain a revenue that is currently not available.

The apparatus thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

The disclosures in Italian Patent Application No. MI2003A001506 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus (1) for projecting advertising pictures, videos and the like in combination with a cinema screening performed by a main projection unit (4), **characterized in that** it comprises at least one auxiliary projection unit (2) that is connected to a central processing unit (3) and to means (8) for storing pictures, clips and the like, said auxiliary projection unit (2) being activated by means of an enable signal that originates from said main projection unit, which is suitable to detect indicator means (6) applied to a projection film (5) in order to determine the moment when said auxiliary projection unit (2) is to be enabled.

2. The apparatus according to claim 1, **characterized in that** said indicator means (6) are applied to the main projection film (5) and are detected by said main projection unit (4), which enables accordingly said auxiliary projection unit (2) by way of said central processing unit (3).

3. The apparatus according to claim 1, **characterized in that** said image storage means (8) comprise at least one among a DVD player, a hard disk, and a videotape player.

4. The apparatus according to one or more of the preceding claims, **characterized in that** it comprises a screen (9) onto which said auxiliary projection unit (2) is suitable to project said pictures or videos taken from said storage means (8).

5. The apparatus according to one or more of the preceding claims, **characterized in that** said central processing unit (3) is a PC.

6. A method for projecting advertising pictures, videos and the like in combination with a projection performed by a main projection unit (4), **characterized in that** it comprises the steps of:
reading, on the part of said main projection unit (4), of a projection film (5) on which indicator means (6) adapted to be detected by said main projection unit (4) have been applied;
upon detection of said indicator means (6), sending an enable signal to a central processing unit (3), which in turn is adapted to drive at least one auxiliary projection unit (2) that in turn is adapted to project pictures and videos taken from means (8) for storing pictures and videos.

7. The method according to claim 6, **characterized in that** said step of sensing said indicator means (6) is performed automatically by said main projection unit (4).

8. The method according to claim 6, **characterized in that** the sensing of said indicator means (6) on the part of said main projection unit (4) synchronizes the operation of said auxiliary projection unit (2).
